Europäisches Patentamt

European Patent Office

Office européen des brevets

(19)

(11) Veröffentlichungsnummer: **0 250 760**
**B1**

(12) **EUROPÄISCHE PATENTSCHRIFT**

(45) Veröffentlichungstag der Patentschrift:
28.03.90

(51) Int. Cl.⁴: **C08L 77/00**, C08L 71/12,
C08K 5/09

(21) Anmeldenummer: 87106142.0

(22) Anmeldetag: 28.04.87

(54) **Schlagzähe thermoplastische Formmassen auf Basis von modifizierten Polyphenylenethern, Polyoctenylenen und Polyamiden.**

(30) Priorität: 28.06.86 DE 3621805

(43) Veröffentlichungstag der Anmeldung:
07.01.88 Patentblatt 88/1

(45) Bekanntmachung des Hinweises auf die Patenterteilung:
28.03.90 Patentblatt 90/13

(84) Benannte Vertragsstaaten:
AT BE CH DE FR GB IT LI NL SE

(56) Entgegenhaltungen:
EP-A- 0 181 449
DE-A- 3 518 277

(73) Patentinhaber: HÜLS AKTIENGESELLSCHAFT,
Patentabteilung / PB 15 - Postfach 13 20,
D-4370 Marl 1(DE)

(72) Erfinder: Dröscher, Michael, Dr., Hetkerbruch 34,
D-4270 Dorsten 11(DE)
Erfinder: Jadamus, Hans, Dr., Hervester Strasse 8,
D-4370 Marl(DE)

## Beschreibung

Polyphenylenether (PPE) sind technische Hochleistungsthermoplaste mit hohen Schmelzviskositäten und Erweichungspunkten. Sie eignen sich für zahlreiche technische Anwendungen, bei denen es auf Beständigkeit bei hohen Temperaturen ankommt (vgl. US-PSS 33 06 874, 33 06 875, 32 57 357 und 32 57 358).

Gewisse Eigenschaften der Polyphenylenether sind für technische Anwendungen unerwünscht. Beispielsweise sind Formteile aus Polyphenylenethern aufgrund schlechter Schlagzähigkeit spröde. Nachteilig sind auch die hohen Schmelzviskositäten und Erweichungspunkte, die zu Schwierigkeiten bei der Verarbeitung führen. Es ist zu berücksichtigen, daß Polyphenylenether bei hohen Temperaturen zu Instabilität und Verfärbung neigen. Polyphenylenether sind in vielen organischen Lösemitteln löslich oder quellen sehr stark. Dies hat zur Folge, daß sie für Anwendungen, bei denen sie in Kontakt mit solchen Lösemitteln kommen, nicht geeignet sind.

Es ist bekannt, daß die Eigenschaften durch Abmischen mit anderen Polymeren verbessert werden können. So haben z. B. Abmischungen mit schlagzähen Polystyrolen eine größere technische Bedeutung erlangt (vgl. DE-B 21 19 301 und 22 11 005). Diese Abmischungen lassen sich gut zu Formteilen mit ausreichender Zähigkeit verarbeiten, weisen jedoch den Nachteil auf, daß mit zunehmendem Polystyrolgehalt die Wärmeformbeständigkeit abnimmt. Die Lösemittelbeständigkeit ist ebenfalls unbefriedigend.

Abmischungen von Polyphenylenethern mit Polyamiden weisen zwar eine gute Fließfähigkeit und auch eine gute Lösemittelbeständigkeit auf (DE-AS 16 94 290, JP-A 78 47 390). Es werden aber in der Regel spröde Produkte erhalten, da die beiden Komponenten unverträglich und deshalb schlecht ineinander dispergierbar sind. Aromatische Polyamide, wie sie beispielsweise gemäß EP-A 0 131 445 eingesetzt werden, lassen sich zudem mit Polyphenylenethern schlecht verarbeiten. Eine bessere Verträglichkeit der beiden Phasen wird durch eine Funktionalisierung des Polyphenylenethers, z. B. mit Maleinsäureanhydrid in Gegenwart von Radikalbildnern, erreicht (JP-OS 84/066 452). Die Verwendung von Radikalbildnern führt aber zu einer unerwünschten und unkontrollierten partiellen Vergelung der PPE-Phase.

Es ist daher vorgeschlagen worden, die Verträglichkeit beider Polymeren durch Zusatz einer ausreichenden Menge eines Fließmittels, z. B. eines organischen Phosphats (vgl. EP-A 0 129 825) oder eines Diamids (vgl. EP-A 0 115 218), zu erhöhen. Solche Lösungen vermögen nicht zu überzeugen, da die verbesserte Verträglichkeit mit einer erheblich reduzierten Wärmeformbeständigkeit erkauft werden muß. Den gleichen Nachteil weisen Formmassen auf, denen Copolymere aus Styrol und ungesättigten Säurederivaten zugesetzt worden sind (vgl. EP-A 0 046 040).

Gegenstand der EP-B 0 024 120 sind Harzmassen, die aus einem Polyphenylenether, einem Polyamid, einer dritten Komponente und gegebenenfalls hochmolekularen Kautschuk-Polymeren bestehen. Als dritte Komponente wird ein flüssiges Dienpolymer, ein Epoxid oder eine Verbindung mit einer Doppel- oder einer Dreifachbindung und einer funktionellen Gruppe (wie z. B. Säure, Anhydrid, Ester, Amino- oder Alkoholgruppe) eingesetzt. Die Zähigkeit der erhaltenen Harzmassen reicht aber für viele Anwendungen nicht aus.

Aus der europäischen Patentanmeldung EP-A 0 205 816 sind schließlich schlagzähe thermoplastische Massen aus einer umgeschmolzenen Vorformmasse, einem überwiegend aliphatischen Polyamid und weiteren Zusätzen bekannt. Die Vorformmasse besteht aus Polyphenylenethern, Polyoctenylen, Maleinsäureanhydrid und einer weiteren Säurekomponente, deren Schmelzpunkt unter 100 °C liegt. Nachteilig ist, daß man bei diesem Verfahren Maleinsäureanhydrid und die weitere Säurekomponente soweit erwärmen muß, daß eine einheitliche Schmelze der vier Bestandteile entsteht. Dies ist aus physiologischen Gründen nicht ganz unbedenklich.

Ziel der vorliegenden Erfindung war es, lösemittelbeständige Formmassen auf Basis von Polyphenylenethern (PPE) und leicht verarbeitbaren Polyamiden herzustellen, die sich durch
- hohe Zähigkeit,
- einen guten Phasenverbund (erkennbar an hohen Reißdehnungswerten),
- eine hohe Lösemittelbeständigkeit und
- eine hohe Wärmeformbeständigkeit
auszeichnen sollten.
Es wurden jetzt Formmassen gefunden, die diesen Ansprüchen gerecht werden. Diese bestehen aus

(a) 5 bis 85 Gewichtsteilen, vorzugsweise 20 bis 50 Gewichtsteilen, einer auf- oder umgeschmolzenen Vorformmasse folgender Zusammensetzung

- 60 bis 98 Gewichtsteile PPE
- 40 bis 2 Gewichtsteile Polyoctenylene

- 1 bis 7,5 Gewichtsteile Bicyclo[2.2.2]-2,3 : 5,6-dibenzooctadien-(2,5)-dicarbonsäure-(7,8)-anhydrid.
(b) 95 bis 15 Gewichtsteilen, vorzugsweise 80 bis 50 Gewichtsteilen, eines aliphatischen Homopolyamids oder eines Copolyamids mit einem überwiegenden Anteil zugrundeliegender aliphatischer Monomereinheiten und
(c) gegebenenfalls Polystyrolharzen, Flammschutzmitteln sowie weiteren Zusatzstoffen.

Es wurde gefunden, daß sehr gute Reißdehnungs- und Kerbschlagzähigkeitswerte erhalten werden, wenn die PPE-Phase in der Polyamidmatrix so dispergiert ist, daß das lineare Mittel der Volumenverteilung D = (Sigma $N_iD_i^4$)/(Sigma $N_iD_i^3$) < 2 μm ist. Hierbei steht $D_i$ für den Durchmesser der Partikel und $N_i$ gibt die Zahl der Partikel mit dem Durchmesser $D_i$ an.

Das Verfahren zur Herstellung dieser Massen zeichnet sich dadurch aus, daß man zuerst die feste Mischung aus dem Polyphenylenether und dem Polyoctenylen mit Bicyclo[2.2.2]-2,3 : 5,6-dibenzooctadien-(2,5)-dicarbonsäure-(7,8)-anhydrid behandelt, das Gemisch aufschmilzt und sodann das Polyamid und gegebenenfalls die weiteren Komponenten zusetzt.

Formmassen mit besonders hohen Reißdehnungs- und Kerbschlagzähigkeitswerten lassen sich erhalten, wenn man maximal 50 Gewichtsteile der beschriebenen Vorformmasse verwendet.

Unter thermoplastischen Massen sollen im Rahmen dieser Erfindung ungeformte Mischungen angesehen werden, die sich durch thermoplastische Verarbeitung zu Formteilen oder zu Halbzeug verarbeiten lassen. Die thermoplastischen Massen können beispielsweise als Granulat vorliegen.

Wichtig ist, daß die Vorformmasse vor ihrer Verwendung in den thermoplastischen Massen entweder auf- oder umgeschmolzen wurde.

Als Polyphenylenether kommen in erster Linie Polyether auf Basis von 2,6-Dimethylphenol infrage, wobei der Ethersauerstoff der einen Einheit an den Benzolkern der benachbarten Einheit gebunden ist. Dabei sollen mindestens 50 Einheiten miteinander verknüpft sein.

Grundsätzlich kommen auch andere o,o'-Dialkylphenole infrage, deren Alkylrest vorzugsweise höchstens 6 C-Atome besitzt, sofern dieser kein alpha-ständiges tertiäres C-Atom aufweist. Ferner eignen sich Phenole, die lediglich in einer ortho-Stellung durch einen tertiaren Alkylrest, insbesondere einen tertiaren Butyl rest, substituiert sind. Jeder der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Die Polyphenylenether können z. B. in Gegenwart von komplexbildenden Mitteln, wie Kupferbromid und Morpholin, aus den Phenolen hergestellt werden (vgl. DE-OSS 32 24 692 und 32 24 691). Die Viskositätszahlen, bestimmt nach DIN 53 728 in Chloroform bei 25 °C, liegen im Bereich von 35 bis 80 cm/g. Bevorzugt ist das Polymere des 2,6-Dimethylphenols, der Poly-(2,6-dimethyl-1,4-phenylenether), mit einer Grenzviskosität von 0,3 bis 0,65 cm³/g.

Die Polyphenylenether werden üblicherweise als Pulver oder Granulate eingesetzt.

Die Polyoctenylene werden durch ringöffnende bzw. ringerweiternde Polymerisation von Cyclooocten hergestellt (siehe z. B. A. Dräxler, Kautschuk + Gummi, Kunststoffe 1981, Seiten 185 bis 190). Polyoctenylene mit unterschiedlichen Anteilen an cis- und trans-Doppelbindungen sowie unterschiedlichen J-Werten und dementsprechend unterschiedlichen Molekulargewichten sind nach literaturbekannten Methoden erhältlich. Bevorzugt werden Polyoctenylene mit einer Viskositätszahl von 50 bis 350 cm³/g, vorzugsweise 80 bis 160 cm³/g, bestimmt an einer 0.1 %igen Lösung in Toluol. 55 bis 95 %, vorzugsweise 75 bis 85 %, seiner Doppelbindung liegen in der trans-Form vor.

Es gibt verschiedene Möglichkeiten, um eine Mischung aus dem Polyphenylenether und dem Polyoctenylen herzustellen. Eine Möglichkeit besteht darin, daß man beide Polymere in einem geeigneten Lösemittel löst und die Mischung durch Abdampfen des Lösemittels oder Ausfällen mit einem Nichtlöser isoliert. Eine andere Möglichkeit besteht darin, die beiden Polymeren in der Schmelze zu vereinigen.

Das pulverförmige Bicyclo[2.2.2]-2,3 : 5,6-dibenzooctadien-(2,5)-dicarbonsäure-(7,8)-anhydrid kann z.B. in einem Labormischer auf das PPE/Polyoctenylen-Granulat aufgetrommelt werden oder direkt in die PPE-Polyoctenylen-Schmelze dosiert werden.

Wichtig ist, daß die so erhaltene Masse einmal aufgeschmolzen wird und entweder in dieser Schmelzform oder nach deren Erstarrung in fester Form mit dem Polyamid und gegebenenfalls den übrigen Komponenten vereinigt wird.

Als Polyamide kommen Homo- und Copolymere infrage, die vorzugsweise ausschließlich aliphatischer Struktur sind. Insbesondere seien hier die 6-, 66-, 612-, 11- und 12-Polyamide aufgeführt. Geeignet sind aber auch gemischte aliphatisch-aromatische Copolyamide, sofern der Anteil der zugrunde liegenden aliphatischen Bausteine überwiegt (vgl. US-A 2 071 250, 2 130 523, 2 130 948, 2 241 322, 2 312 966, 2 512 606, 3 393 210; Kirk-Othmer, Encyclopedia of chemical technology, Vol. 18, John-Wiley & Sons (1982), Seiten 328 bis 435). Das Zahlenmittel des Molekulargewichtes der Polyamide liegt über 5 000, vorzugsweise über 10 000.

Die Vereinigung der Polyamide mit der Vorformmasse erfolgt beispielsweise durch Mischen der beiden Schmelzen in einem gut knetenden Aggregat bei 250 bis 350 °C, vorzugsweise bei 270 bis 310 °C. Es ist vorteilhaft, die beiden Komponenten trocken vorzumischen und zu extrudieren oder das Polyamid in die Schmelze der PPE-Vorformmasse zu dosieren.

Bezogen auf 5 bis 85 Gewichtsteile der Vorformmasse werden 95 bis 15 Gewichtsteile Polyamid eingesetzt. Vorzugsweise sind es 80 bis 50 Gewichtsteile Polyamid bei 20 bis 50 Gewichtsteilen der Vorformmasse.

Die Formmassen können zusätzlich noch unmodifizierte oder schlagzähmodifizierte Polystyrolharze enthalten. Zur Erzielung der angestrebten hohen Wärmeformbeständigkeit werden in der Regel Formmassen mit einem geringen Gehalt dieser Harze eingesetzt. Die Menge der Polystyrolharze beträgt maximal 50 Gew.-%, vorzugsweise maximal 20 Gew.-%, bezogen auf die eingesetzte Menge Polyphenylenether.

Die erfindungsgemäßen thermoplastischen Massen können daneben einen Flammschutz sowie weitere Zusatzstoffe wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z. B. in der Monographie von H. Vogel "Flammfestmachen von Kunststoff", Hüthig Verlag, 1966, auf den Seiten 94 bis 102 beschrieben werden. Es kann sich aber auch um halogenierte Polymere, wie z.B. halogenierte Polyphenylenether (siehe DE-OS 33 34 068) oder bromierte Oligo- bzw. Polystyrole, handeln. Die Verbindungen sollten mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstofffasern.

Geeignete Stabilisatoren umfassen organische Phosphite, wie z.B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z.B. oxidierte Kohlenwasserstoffe sowie ihre Alkali- und Erdalkalisalze.

Die erhaltenen Formmassen lassen sich mit den für die Thermoplastverarbeitung üblichen Verfahren, wie z.B. Spritzgießen und Extrusion, zu Formkörpern verarbeiten.

Beispiele für technische Anwendungsgebiete sind Rohre, Platten, Gehäuse und sonstige Artikel für den Automobil-, Elektro- und Feinwerksektor.

Die erfindungsgemäßen Formmassen zeichnen sich gegenüber den Produkten des Standes der Technik durch eine hohe Zähigkeit bei guter Wärmeformbeständigkeit und Lösemittelbeständigkeit aus.

Die Viskositätszahl (J) des Polyphenylenethers wurde nach DIN 53 728 bei 25°C in Chloroform (Konzentration: 0,5 g Polymer in 100 ml Lösung) in ml/g gemessen.

Die Kerbschlagzähigkeit ($a_K$) der Formmassen wurde nach DIN 53 453 an bei 290°C gespritzten Normkleinstäben mit Rechteckkerbe bei Raumtemperatur gemessen.

Die Reißdehnung (Epsilon $_R$) wurde nach DIN 53 455 an bei 290°C gespritzten Schulterstäben bestimmt.

Die Vicat-Erweichungstemperatur nach DIN 53 699 wurde an bei 290°C gespritzten Formkörpern von 4 mm Dicke bestimmt.

Zur Bestimmung der PPE-Partikelgröße wird die Formmasse in Hexafluorisopropanol (HFIP) gelöst, wobei die PPE-Komponente aufschwimmt. Das Flotat wird mehrmals mit HFIP gewaschen, getrocknet und im Rasterelektronenmikroskop untersucht. Die Partikeldurchmesser werden durch Ausmessen von mindestens 1 000 Teilchen anhand der photographischen Aufnahmen bestimmt.

Beispiele

Herstellung und Herkunft der Komponenten

### 1. Polyphenylenether

Die Polyphenylenether erhält man durch oxidative Kupplung von 2,6-Dimethylphenol, Abstoppung der Reaktion bei dem gewünschten J-Wert und anschließende Reaktionsextraktion gemäß DE-OSS 33 13 864 und 33 32 377.

### Beispiel 1.1

Entsprechend wird ein Polyphenylenether mit einem J-Wert von 48 cm³/g hergestellt. Das Lösemittel wird durch Abdampfen entfernt und die Schmelze über einen Entgasungsextruder extrudiert, anschließend granuliert und getrocknet.

### Beispiel 1.2

Entsprechend wird ein Polyphenylenether mit einem J-Wert von 48 cm³/g als 10 %ige Toluollösung hergestellt.

2. Polyoctenylene

Es wird ein Polyoctenylen mit einem J-Wert von 120 cm³/g und einem trans-Gehalt von 80 % eingesetzt. Ein solches Produkt ist unter dem Namen VESTENAMER$^R$ 8012 im Handel erhältlich (Hersteller Hüls Aktiengesellschaft, D-4370 Marl). Weitere Kenndaten dieses Produktes sind der Zeitschrift "Kautschuk, Gummi, Kunststoffe" 1981, Seiten 185 bis 190, sowie dem Hüls-Merkblatt Nr. 2247 "VESTENAMER$^R$ 8012" zu entnehmen. Das Polyoctenylen kann beispielsweise auch nach K.J. Irvin "Olefin Metathesis", Academic Press, Seiten 236 ff., 1983, und den dort angegebenen weiteren Litera-turstellen hergestellt werden.

3. Mischung aus Polyphenylenethern und Polyoctenylen

In einer Lösung gemäß Beispiel 1.2 wird das Polyoctenylen gemäß Beispiel 2 aufgelöst, wobei auf 90 Massenteile Polyphenylenether 10 Masseteile Polyoctenylen kommen. Die Lösung wird auf 70 % aufkonzentriert. Das noch verbliebene Lösemittel wird mittels eines Entgasungsextruders entfernt. Es wird granuliert und getrocknet.

4. Bicyclo-[2.2.2]-2,3 : 5,6-dibenzooctadien-(2,5-)-dicarbonsäure-(7,8)-anhydrid

50 g Anthracen und 27,5 g Maleinsäureanhydrid werden in 150 ml Xylol 3 Stunden unter Rückfluß erhitzt. Beim Abkühlen auf Raumtemperatur scheiden sich farblose Kristalle aus. Die Kristalle werden isoliert, mit Aceton gewaschen und getrocknet. Man erhält 63 g Reaktionsprodukt mit einem Festpunkt von 255 bis 263 °C.

5. Herstellung der Vorformmasse

Auf 2 kg der Mischung gemäß 3 werden in einem Labormischer bei Raumtemperatur 50 g pulverförmiges Bicyclo[2.2.2]-2,3 : 5,6-dibenzooctadien-(2,5)-dicarbonsäure-(7,8)-anhydrid aufgetrommelt.
Das so behandelte Granulat wird in einem Zweischneckenkneter bei 290 °C Schmelztemperatur umgeschmolzen, stranggranuliert und getrocknet.

Vergleichsversuch A

20 g Maleinsäureanhydrid werden in einem Zweischneckenkneter zu 2 kg PPE gemäß Beispiel 1.1 bei einer Schmelztemperatur von 290 °C zugemischt. Anschließend wird granuliert und getrocknet.

Vergleichsversuch B

Analog zu Beispiel A werden 20 g Maleinsäureanhydrid und 10 g Dicumylperoxid zu 2 kg PPE zugemischt.

6. Formmassen (Beispiele 7 - 9, C - E)

Die gemäß 4, A und B hergestellten Vorformmassen werden nach den Angaben in der Tabelle mit Polyamiden gemischt und in einem Zweischneckenextruder, dessen Dispergierwirkung durch Knetblöcke verstärkt ist, bei 290 °C umgeschmolzen, stranggranuliert und getrocknet. Das Produkt wird zu Norm-körpern verspritzt und geprüft.
Ein Vergleich der Ergebnisse der Versuche 7 - 9 mit denen der Vergleichsversuche C - E zeigt die sehr gute Dispersion der PPE-Phase in der Polyamidmatrix sowie die erheblich verbesserte Kerbschlag-zähigkeit.

Tabelle: Zusammensetzung und Eigenschaften der Formmassen

| Versuch | Zusammensetzung Vorformmasse (Gew.-%) | gemäß Versuch | Polyamid (Gew.-%) | $a_K$ (kJ/m²) | $\text{Epsilon}_R$ (%) | Vicattemp. (°C) B/50 | lineares Mittel der Volumenverteilung der PPE-Teilchen in der Polyamidmatrix (µm) |
|---|---|---|---|---|---|---|---|
| 7 | 40 | 4 | 60[a] | 57 | 62 | 156 | 1,1 |
| 8 | 40 | 4 | 60[b] | 22 | 48 | 195 | 1,4 |
| 9 | 40 | 4 | 60[c] | 14 | 52 | 212 | 1,6 |
| C | 40 | A | 60[a] | 4 | 3 | 159 | 9,7 |
| D | 40 | B | 60[a] | 4 | 6 | 156 | 8,2 |
| E | 40 | B | 60[b] | 4 | 15 | 195 | 8,8 |

a) VESTAMID[R] L 1901 (Hüls AG) = PA 12
b) ULTRAMID[R] B 4 (BASF AG) = PA 6
c) ULTRAMID[R] A 4 (BASF AG) = PA 66

## Patentansprüche

1. Thermoplastische Massen auf Basis von Polyphenylenethern, Polyamiden, ungesättigten Säurederivaten und gegebenenfalls weiteren Zusatzstoffen, dadurch gekennzeichnet, daß sie folgende Bestandteile enthalten:
(a) 5 bis 85 Gewichtsteile einer auf- oder umgeschmolzenen Vorformmasse aus
- 60 bis 98 Gewichtsteilen Polyphenylenether,
- 40 bis 2 Gewichtsteilen Polyoctenylene,
- 1 bis 7,5 Gewichtsteilen Bicyclo[2.2.2]-2,3 : 5,6-dibenzooctadien-(2,5)-dicarbonsäure-(7,8)-anhydrid.
(b) 95 bis 15 Gewichtsteile eines aliphatischen Homopolyamids oder eines Copolyamids mit einem überwiegenden Anteil zugrundeliegender aliphatischer Monomereinheiten und
(c) gegebenenfalls Polystyrolharze, Flammschutzmittel sowie weitere Zusatzstoffe.
2. Thermoplastische Massen nach Anspruch 1, dadurch gekennzeichnet, daß sie
(a) 20 bis 50 Gewichtsteile der Vorformmasse und
(b) 80 bis 50 Gewichtsteile der Polyamide enthalten.
3. Thermoplastische Massen nach Anspruch 2, dadurch gekennzeichnet, daß die in der Polyamidmatrix dispergierten PPE-Teilchen ein lineares Mittel der Volumenverteilung unter 2 μm aufweisen.
4. Thermoplastische Massen nach den Ansprüchen 1 bis 3, dadurch gekennzeichnet, daß als Polyamide 6-, 46-, 66-, 612-, 11- oder 12-Polyamide eingesetzt werden.
5. Thermoplastische Massen nach den Ansprüchen 1 bis 4, dadurch gekennzeichnet, daß das Zahlenmittel des Molekulargewichtes der Polyamide über 5 000, vorzugsweise über 10 000, liegt.
6. Thermoplastische Massen nach den Ansprüchen 1 bis 5, dadurch gekennzeichnet, daß als Polyphenylenether ein Polymeres des 2,6-Dimethylphenols mit einer Grenzviskosität von 0,3 bis 0,65 cm³/g eingesetzt wird.
7. Thermoplastische Massen gemäß den Ansprüchen 1 bis 6, dadurch gekennzeichnet, daß das Polyoctenylen eine Viskositätszahl von 50 bis 350 cm³/g, vorzugsweise 80 bis 160 cm³/g, bestimmt an einer 0,1 %igen Lösung in Toluol, aufweist.
8. Thermoplastische Massen gemäß den Ansprüchen 1 bis 7, dadurch gekennzeichnet, daß 55 bis 95, vorzugsweise 75 bis 85 %, der Doppelbindungen des Polyoctenylens trans-konfiguriert sind.
9. Verfahren zur Herstellung der thermoplastischen Massen nach den Ansprüchen 1 bis 8, dadurch gekennzeichnet, daß man zuerst die feste Mischung aus dem Polyphenylenether und dem Polyoctenylen zusammen mit Bicyclo[2.2.2]-2,3 : 5,6-dibenzooctadien-(2,5)-dicarbonsäure(7,8)-anhydrid aufschmilzt und sodann das Polyamid und gegebenenfalls Polystyrolharze, Flammschutzmittel sowie weitere Zusatzstoffe zusetzt.

## Claims

1. A thermoplastic composition based on polyphenylene ethers, polyamides, unsaturated acid derivatives and, if desired, other additives, characterized in that it contains the following components:
(a) 5 to 85 parts by weight of a molten or remelted preliminary moulding composition made from
– 60 to 98 parts by weight of polyphenylene ether,
– 40 to 2 parts by weight of polyoctenylenes,
- 1 to 7.5 parts by weight of bicyclo[2.2.2.]-2,3:5,6-dibenzooctadiene-(2,5)-dicarboxylic acid (7,8)-anhydride,
(b) 95 to 15 parts by weight of an aliphatic homopolyamide or of a copolyamide based on a predominant proportion of aliphatic base monomer units and
(c) if desired, polystyrene resins, flame retardants and other additives.
2. A thermoplastic composition according to claim 1, characterized in that it contains
(a) 20 to 50 parts by weight of the preliminary moulding composition and
(b) 80 to 50 parts by weight of the polyamides.
3. A thermoplastic composition according to claim 2, characterized in that the PPE particles dispersed in the polyamide matrix have a linear volume mean of the diameters distribution of below 2 μm.
4. A thermoplastic composition according to any of claims 1 to 3, characterized in that polyamide-6, polyamide-46, polyamide-66, polyamide-612, polyamide-11 or polyamide-12 are used as polyamides.
5. A thermoplastic composition according to any of claims 1 to 4, characterized in that the number-average molecular weight of the polyamides is above 5,000, preferably above 10,000.
6. A thermoplastic composition according to any of claims 1 to 5, characterized in that a polymer of 2, 6-dimethylphenol having an intrinsic viscosity of 0.3 to 0.65 cm³/g is used as the polyphenylene ether.
7. A thermoplastic composition according to any of claims 1 to 6, characterized in that the polyoctenylene has a viscosity number, determined on a 0.1% strength solution in toluene, of 50 to 350 cm³/g, preferably 80 to 160 cm³/g.
8. A thermoplastic composition according to any of claims 1 to 7, characterized in that 55 to 95, preferably 75 to 85%, of the double bonds of the polyoctenylene are in the trans-configuration.

9. A process for the preparation of the thermoplastic composition according to any of claims 1 to 8, characterized in that the solid mixture of the polyphenylene ether and the polyoctenylene is initially melted together with bicyclo[2.2.2]-2,3:5,6-dibenzooctadiene-(2,5)-dicarboxylic acid (7,8)-anhydride and then the polyamide and, if desired, polystyrene resins, flame retardants and other additives are added.

**Revendications**

1. Masses thermoplastiques à base d'éthers polyphényléniques, de polyamides, de dérivés d'acide insaturés et éventuellement d'autres additifs, caractérisées par le fait qu'elles renferment les constituants suivants:
(a) de 5 à 85 parties en poids d'une masse de prémoulage fondue ou refondue, constituée par
– de 60 à 98 parties en poids d'éther polyphénylénique,
– de 40 à 2 parties en poids de poly-octénylènes,
– de 1 à 7,5 parties en poids d'anhydride d'acide bicyclo[2.2.2.]-2,3:5,6-dibenzo-octadiène-(2,5)-dicarboxylique-(7,8).
(b) 95 à 15 parties en poids d'une homo-polyamide aliphatique ou d'un copolyamide présentant une fraction prépondérante d'unités monomères aliphatiques de base, et
(c) éventuellement des résines de polystyrène, des agents ignifugeants, ainsi que d'autres additifs.
2. Masses thermoplastiques selon la revendication 1, caractérisées par le fait qu'elles renferment
(a) de 20 à 50 parties en poids de la masse de prémoulage et
(b) de 80 à 50 parties en poids des polyamides.
3. Masses thermoplastiques selon la revendication 2, caractérisées par le fait que les particules d'éthers polyphényléniques dispersées dans la matrice de polyamide présentent une moyenne linéaire de la répartition volumique inférieure à 2 μm.
4. Masses thermoplastiques selon les revendications 1 à 3, caractérisées par le fait que l'on utilise, comme polyamides, les polyamides "6", "46", "66", "612", "11" ou "12".
5. Masses thermoplastiques selon les revendications 1 à 4, caractérisées par le fait que la moyenne numérique du poids moléculaire des polyamides est supérieure à 5 000, de préférence supérieure à 10 000.
6. Masses thermoplastiques selon les revendications 1 à 5, caractérisées par le fait que l'on utilise, comme éther polyphénylénique, un polymère du 2,6-diméthyl-phénol présentant une viscosité limite de 0,3 à 0,65 cm$^3$ par gramme.
7. Masses thermoplastiques selon les revendications 1 à 6, caractérisées par le fait que le poly-octénylène présente un indice de viscosité de 50 à 350 cm$^3$ par gramme, de préférence de 80 à 160 cm$^3$ par gramme, déterminé sur une solution à 0,1% dans le toluène.
8. Masses thermoplastiques selon les revendications 1 à 7, caractérisées par le fait que de 55 à 95, de préférence de 75 à 85% des doubles liaisons du poly-octénylène ont la configuration trans.
9. Procédé de préparation des masses thermoplastiques selon les revendications 1 à 8, caractérisées par le fait que l'on fait fondre d'abord le mélange solide constitué par l'éther polyphénylénique et par le poly-octénylène conjointement avec l'anhydride de l'acide bicyclo[2.2.2]-2,3:5,6-dibenzo-octadiène-(2,5)-dicarboxylique-(7,8) et que l'on ajoute ensuite la polyamide et éventuellement des résines de polystyrène, des agents ignifugeants, ainsi que d'autres additifs.